Europäisches Patentamt

European Patent Office

Office européen des brevets

(11) Veröffentlichungsnummer: **0 345 630**
**A2**

## (12) EUROPÄISCHE PATENTANMELDUNG

(21) Anmeldenummer: 89109894.9

(22) Anmeldetag: 01.06.89

(51) Int. Cl.⁴: **B29C 45/17**

(30) Priorität: 07.06.88 AT 1470/88

(43) Veröffentlichungstag der Anmeldung:
13.12.89 Patentblatt 89/50

(84) Benannte Vertragsstaaten:
AT BE CH DE FR GB IT LI NL SE

(71) Anmelder: Engel Maschinenbau Gesellschaft m.b.H.

A-4311 Schwertberg(AT)

(72) Erfinder: Piller, Rudolf
Heindl-Kai 56
A-4310 Mauthausen(AT)

(74) Vertreter: Torggler, Paul, Dr. et al
Wilhelm-Greil-Strasse 16
A-6020 Innsbruck(AT)

(54) Automatische Kupplung.

(57) Eine automatische Kupplung für eine dreh- und axialbewegbare Schnecke (4) einer auswechselbaren Plastifiziereinheit einer Spritzgießmaschine. Ein Mitnehmerring (9) für die Kraftübertragung zwischen der im Massenzylinder (12) der Plastifiziereinheit geführten Schnecke (4) und der Antriebsvorrichtung (7,8) ist vorgesehen. Die Schnecke (4) ist in einer Lagerglocke (1) gelagert, die das hintere Ende der Schnecke (4) umgibt und an der Keile (6) der Spritzgießmaschine angreifen. Die Schnecke (4) ist mit einer Adapterhülse (3) form- und/oder kraftschlüssig verbunden, die in der Lagerglocke (1) geführt ist. Die Adapterhülse (3) weist einen Kalibrierring (13) auf, an dem ein Kalibrierbalken (14) angreift.

EP 0 345 630 A2

Fig 1

Die Erfindung bezieht sich auf eine automatische Kupplung für eine dreh- und axialbewegbare Schnecke einer auswechselbaren Plastifiziereinheit einer Spritzgießmaschine mit der maschinenseitigen Antriebsvorrichtung der Spritzgießmaschine, mit einem Mitnehmerring für die Kraftübertragung zwischen der im Massezylinder der Plastifiziereinheit geführten Schnecke und der Antriebsvorrichtung.

Bei Kupplungen zwischen der Schnecke und der Antriebsvorrichtung sind für die Drehübertragung üblicherweise Mehrkant- oder Keilwellenprofile vorgesehen, die einen Formschluß herstellen und die Übertragung der axialen Zug- oder Druckkräfte erfolgt meist über Zuganker oder dergleichen. Soll die Schnecke ausgetauscht werden, müssen die Kupplungsteile von Hand ausgelöst werden, was zeitaufwendig ist und daher zu unerwünschten Stehzeiten der Spritzgießmaschine führt.

Kupplungsvorrichtungen, die automatisch lösbar sind, sind nach dem bekannten Stand der Technik unverhältnismäßig aufwendig und störanfällig.

Aufgabe der Erfindung ist es, eine automatische Kupplung der eingangs erwähnten Art zu schaffen, die mit einfachen Mitteln eine schnelle automatische Trennung der Schnecke von der Antriebsvorrichtung bzw. Kupplung der Schnecke mit der Antriebsvorrichtung ermöglicht, und wobei eine herkömmliche Standardschnecke auf einfache Art und Weise mit einer Kalibriervorrichtung versehen werden kann.

Die erfindungsgemäße Aufgabe wird dadurch gelöst, daß die Schnecke mit einer Adapterhülse form- und/oder kraftschlüssig verbunden ist, die einen Kalibrierring trägt, an dem mindestens ein zur Schnecke radial bewegbarer Kalibrier balken angreift.

Vorteilhaft ist vorgesehen, daß die Adapterhülse in einer feststehenden Lagerglocke an der Spannelemente der Spritzgießmaschine angreifen, drehbar gehalten ist.

Ein Ausführungsbeispiel der Erfindung sieht vor, daß der Mitnehmerring mit der Schnecke und/oder der Adapterhülse form- und/oder kraftschlüssig verbunden ist und daß die Antriebswelle der Antriebsvorrichtung einen Zentrier- und Anschlagbolzen aufweist, der in den Mitnehmerring ragt.

Weiters ist vorgesehen, daß der Kalibrierbalken in einer am Massezylinder befestigten Kalibrierzentrierung geführt ist.

In einem weiteren Ausführungsbeispiel der Erfindung ist vorgesehen, daß der Kalibrierbalken während des Ein- bzw. Auskupplungsvorganges den Kalibrierring greift und daß die Spannelemente vorzugsweise durch Federkraft beaufschlagte Keile sind, die an einem Spannflansch der Lagerglocke angreifen.

Nachfolgend wird ein Ausführungsbeispiel der Erfindung anhand der Figuren der Zeichnungen eingehend beschrieben.

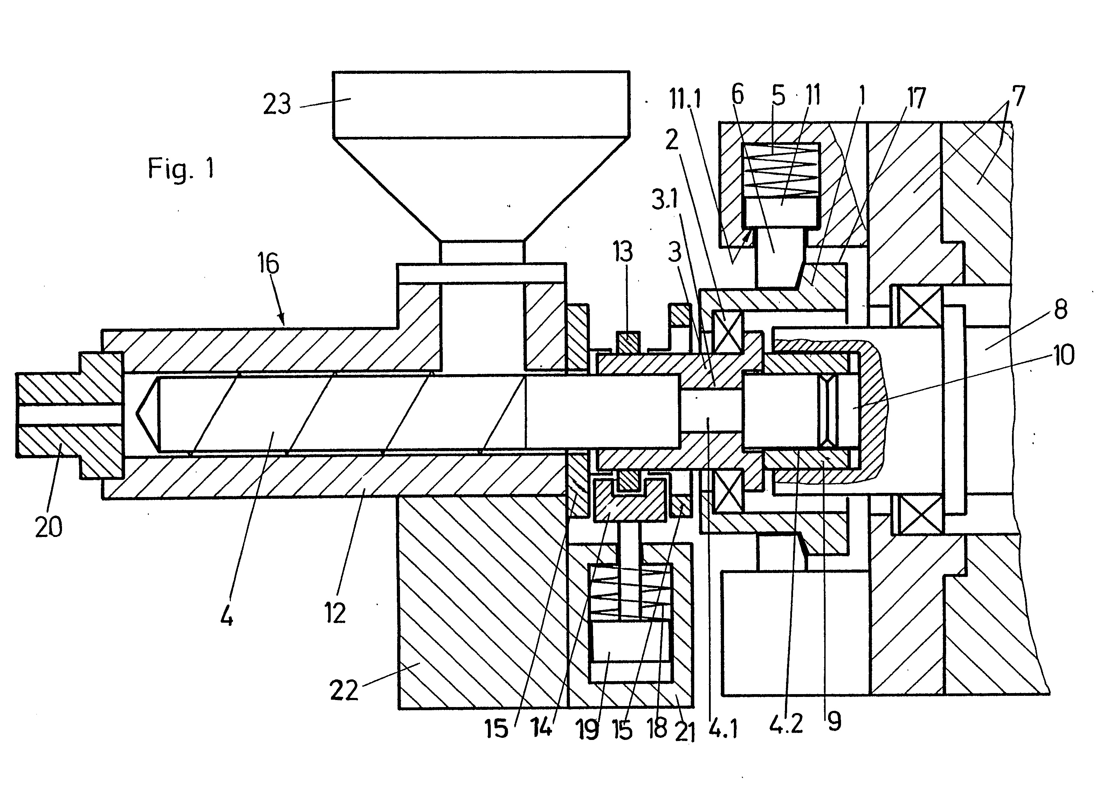

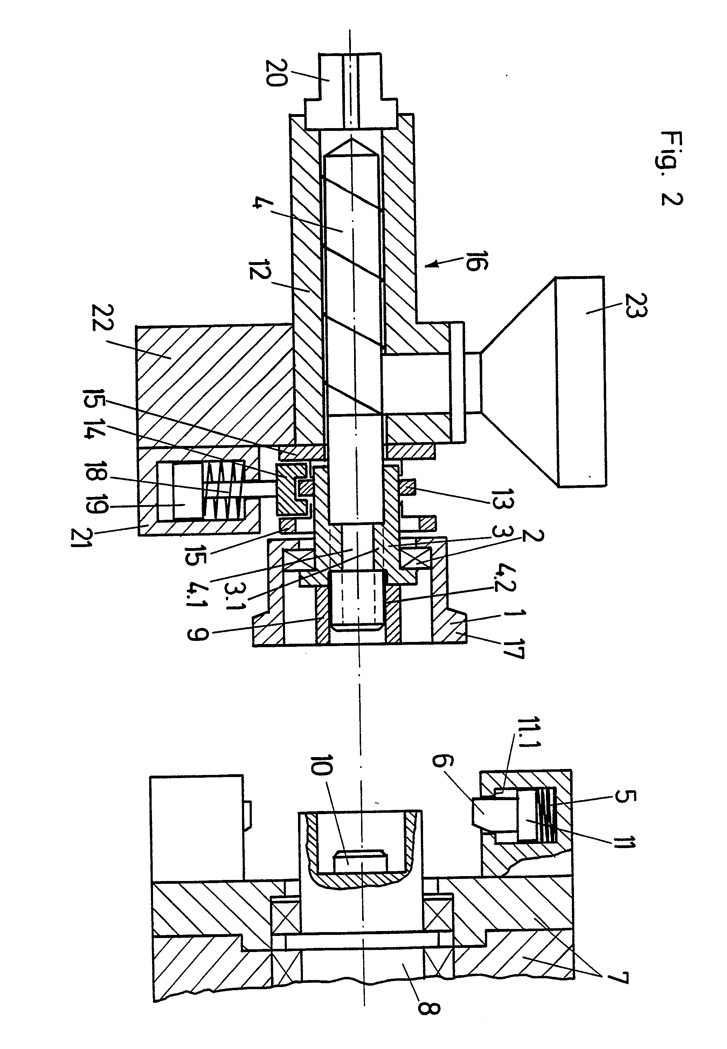

Die Fig. 1 zeigt einen Axialschnitt durch die erfindungsgemäße Kupplung und Teile der Plastifiziereinheit und der Antriebsvorrichtung in der eingekuppelten Stellung und die Fig. 2 zeigt einen gleichen Schnitt in der ausgekuppelten Stellung.

Die nicht unmittelbar zur Erfindung gehörenden Teile der Spritzgießmaschine werden in der nachfolgenden Beschreibung nicht behandelt, da sie nach dem bekannten Stand der Technik ausgeführt sind.

Die in der Plastifiziereinheit 16 zugehörigen Teile sind der Massezylinder 12, die Schnecke 4, die Adapterhülse 3, der Mitnehmerring 9 und die Lagerglocke 1. Die in der Plastifiziereinheit 16 befindliche Schnecke 4, sowie die Adapterhülse 3, der Mitnehmer 9, die Lagerglocke 1, die Radial-Axiallagerung 2 und der Kalibrierring 13 bilden eine fixe, zusammenmontierte Einheit.

Die Adapterhülse 3 kann von zwei zusammengeschraubten Halbschalen gebildet werden. Eine andere Ausführungsform sieht vor, daß die Adapterhülse 3 im Bereich 3.1 und die Schnecke 4 im Bereich 4.2 mit ineinander greifenden Vielkeilwellenprofilen versehen sind. Bei der Montage wird die Adapterhülse 3 mit ihrem Vielkeilwellenprofil über das Vielkeilwellenprofil der Schnecke 4 geschoben und anschließend um 15° verdreht. Dadurch ist die Adapterhülse 3 auf der Schnecke 4 in axialer Richtung fixiert.

Maschinenseitig gelagert, d.h. der Antriebseinheit 7 zugehörig, sind die Antriebswelle 8, der Anschlagbolzen 10 und die Keile 6. Diese Teile sind ebenfalls eine fixe, zusammenmontierte Einheit.

Die Lagerglocke 1 ist über ein Axial- und Radiallager 2 auf der Adapterhülse 3 gelagert. Die Adapterhülse 3 ist mit einer Ringnut 4.1 an der Schnecke 4 form- und/oder kraftschlüssig verbunden. Diese Verbindung ermöglicht es, von der Antriebswelle 8 über die Adapterhülse 3 axiale Kräfte und Bewegungen auf die Schnecke 4 zu übertragen.

Zur Übertragung des erforderlichen Drehmomentes von der Antriebswelle 8 auf die Schnecke 4 wird der Mitnehmerring 9 form- oder kraftschlüssig mit der Schnecke 4, sowie der Adapterhülse 3 verbunden und formschlüssig mit der Antriebswelle 8 bzw. dem Anschlagbolzen 10. Der form- und/oder kraftschlüssig mit der Antriebswelle 8 verbundene Zentrier-und Anschlagbolzen 10 greift in den Mitnehmerring 9 ein und stellt die Zentrizität zwischen der Schneckeneinheit 1,2, 3,4,9 und der Antriebseinheit 7,8 her.

Der Mitnehmerring 9 ist mit zwei seitlichen, zentrischen parallelen Flächen (sogenannten Schlüsselflächen) ausgebildet, welche in der Antriebswelle 8 formschlüssig aufgenommen werden. Dafür wird die Antriebswelle 8 gabelförmig, stirnseitig aufgeschlitzt. Durch diesen Formschluß ist es nun möglich, Drehkräfte zu übertragen. Der Zentrier- und Anschlagbolzen dient primär zur Übertragung von einseitigen Axialkräften (Einspritzkraft) und sekundär zur Rundlaufzentrierung der Schneckeneinheit. Die Verbindung des Mitnehmerringes 9 mit der Schnecke 4 dient der Drehmomentenübertragung. Die Verbindung des Mitnehmerringes 9 mit der Adapterhülse 3 dient als Verdrehsicherung für die Adapterhülse 3 und als Verliersicherung für den Mitnehmerring 9 selbst, falls die Plastifiziereinheit 16 transportiert werden muß. Der Mitnehmerring 9 ist mit der Adapterhülse 3 mittels Schrauben verbunden.

Die Lagerglocke 1 wird durch den Angriff selbsthemmender Keile 6, die von Federn 5 beaufschlagt sind, gehalten. Die Keile 6 sind dabei maschinenseitig an der Antriebsvorrichtung 7 gelagert und greifen an einem Halteflansch 17 der Lagerglocke 1 an.

Durch den Angriff der Keile 6 an der Lagerglocke 1 und dadurch, daß die Adapterhülse 3 in der Lagerglocke 1 geführt und gehalten ist, ist eine konzentrische, spielfreie, axiale sowie radiale Verbindung der Schneckeneinheit mit der maschinenseitigen Antriebseinheit 7 hergestellt.

Zum Lösen dieser Verbindung werden die mit den Keilen 6 verbundenen Kolben 11 an den Kolbenringflächen mittels einer Hydraulikflüssigkeit soweit angehoben, daß der Eingriff zwischen den Keilen 6 und der Lagerglocke 1 aufgehoben ist, wodurch die Verbindung zwischen der Schneckeneinheit 1,2,3,4,9 und der Antriebseinheit 7,8 gelöst ist.

Um den automatischen Kupplungsvorgang zu vereinfachen und zu beschleunigen, wird die Schneckeneinheit 1,2,3,4,9 in einer genau definierten Längsposition zum Massezylinder festgehalten, d.h. kalibriert. Zu diesem Zweck ist auf der Adapterhülse 3 ein Kalibrierring 13 form- und/oder kraftschlüssig befestigt. Beispielsweise weist die Adapterhülse 3 ein Außengewinde auf, auf das der Kalibrierring 13 aufgeschraubt ist. Der Kalibrierring 13 wird während des Kupplungsvorganges durch einen radial zur Schnecke 4 bewegbaren Kalibrierbalken 14 in einer am Massezylinder 12 befestigten Kalibrierzentrierung 15 form- und/oder kraftschlüssig festgehalten. Der Kalibrierbalken 14 wird dabei entgegen der Kraft der Feder 18 durch eine am Kolben 19 angreifende Hydraulikflüssigkeit verschoben.

Anstelle des Kalibrierringes 13 und des gabelförmigen Kalibrierbalkens 14 wird natürlich auch die umgekehrte Konstruktion möglich. Das heißt, die Adapterhülse 3 könnte anstatt des Kalibrierringes 13 eine Ringnut aufweisen, in die ein Vorsprung des Kalibrierbalkens 14 eingreift.

Bei einer Bewegung der Spritzeinheit (Antriebseinheit 7,8) wird auch die komplette Schneckeneinheit 1,2,3,4,9 nach rechts mitgezogen, wobei sich die Schnecke 4 am Anschlag-und Zentrierbolzen 10 abstützt und die Lagerglocke 1 über die Keile 6 spielfrei und mit Vorspannung auch in Richtung der Spritzeinheit (Antriebsvorrichtung 7 und Antriebswelle 8) gedrückt wird.

In den Figuren der Zeichnungen sind noch die Zylinder 21 für den Kalibrierbalken 14, die Zylinderplatte 2 und die Meßtrichter 23 eingezeichnet.

## Ansprüche

1. Automatische Kupplung für eine dreh- und axialbewegbare Schnecke einer auswechselbaren Plastifiziereinheit einer Spritzgießmaschine mit der maschinenseitigen Antriebsvorrichtung der Spritzgießmaschine, mit einem Mitnehmerring für die Kraftübertragung zwischen der im Massezylinder der Plastifiziereinheit geführten Schnecke und der Antriebsvorrichtung, dadurch gekennzeichnet, daß die Schnecke (4) mit einer Adapterhülse (3) form- und/oder kraftschlüssig verbunden ist, die einen Kalibrierring (13) trägt, an dem mindestens ein zur Schnecke (4) radial bewegbarer Kalibrierbalken (14) angreift.

2. Automatische Kupplung nach Anspruch 1, dadurch gekennzeichnet, daß die Adapterhülse (3) in einer feststehenden Lagerglocke (1) an der Spannelemente der Spritzgießmaschine angreifen, drehbar gehalten ist.

3. Automatische Kupplung nach Anspruch 1, dadurch gekennzeichnet, daß der Mitnehmerring (9) mit der Schnecke (4) und/oder der Adapterhülse (3) form- und/oder kraftschlüssig verbunden ist und daß die Antriebswelle (8) der Antriebsvorrichtung (7) einen Zentrier- und Anschlagbolzen (10) aufweist, der in den Mitnehmerring (9) ragt.

4. Automatische Kupplung nach Anspruch 1, dadurch gekennzeichnet, daß der Kalibrierbalken (14) in einer am Massezylinder (12) befestigten Kalibrierzentrierung (15) geführt ist.

5. Automatische Kupplung nach Anspruch 4, dadurch gekennzeichnet, daß· der Kalibrierbalken (14) während des Ein- bzw. Auskupplungsvorganges den Kalibrierring (13) greift.

6. Automatische Kupplung nach Anspruch 1, dadurch gekennzeichnet, daß die Spannelemente vorzugsweise durch Federkraft beaufschlagte Keile (6) sind, die an einem Spannflansch (17) der Lagerglocke (1) angreifen.

7. Automatische Kupplung nach Anspruch 1, dadurch gekennzeichnet, daß die Adapterhülse (3) ein Außengewinde aufweist, auf das der Kalibrierring (13) aufgeschraubt ist.

Fig. 1

Fig. 2